# EUROPÄISCHE PATENTSCHRIFT

(11) **EP 1 775 164 B1**
(45) Veröffentlichungstag und Bekanntmachung des Hinweises auf die Patenterteilung: **09.07.2008**
(21) Anmeldenummer: 06019729.0
(22) Anmeldetag: 21.09.2006
(51) Int. Cl.: B60R 5/04, B60R 21/06, B60J 1/20

(54) **Schutzvorrichtung mit austauschbaren Adapterteilen**
Security device with exchangeable adapter elements
Dispositif de sécurité avec des pièces d'adaptation échangeables

(30) Priorität: 14.10.2005 DE 102005049989; 14.10.2005 US 251621
(43) Veröffentlichungstag der Anmeldung: 18.04.2007
(73) Patentinhaber: BOS GmbH & Co. KG, 73760 Ostfildern (DE)
(72) Erfinder: Davenport, Mark, Macomb, MI 48044 (US); Uhazie, Mike, Oakland Twp, MI 48363 (US); Meyer, Carsten, Rochester Hills, MI 48306 (US); Walter, Herbert, 73061 Ebersbach (DE)
(74) Vertreter: Patentanwälte Ruff, Wilhelm, Beier, Dauster & Partner

(56) Entgegenhaltungen:
- EP-A2- 0 652 136
- EP-A2- 0 754 594
- DE-C1- 19 915 173
- US-A- 4 168 094
- US-A- 5 813 449

## Beschreibung

Die Erfindung betrifft eine Schutzvorrichtung für ein Kraftfahrzeug gemäß dem Oberbegriff des Anspruchs 1.

Aus dem Stand der Technik sind Schutzvorrichtungen für Kraftfahrzeuge bekannt. Derartige Schutzvorrichtungen werden in einem Innenraum eines Kraftfahrzeugs, insbesondere als Sicherheits-Trennnetz zur Abtrennung eines Laderaumabschnitts von einem Passagierabschnitt, als Blickschutz bzw. Sonnenschutz für den Laderaumabschnitt und/oder als Sonnenschutz für Fahrzeugscheiben verwendet.

Aus der DE 29 41 711 C2 ist eine als Rollo zum Abdecken eines Heckladeraumes eines Kraftfahrzeuges ausgeführte Schutzvorrichtung bekannt. Das Rollo weist eine Welle und eine die Welle koaxial umschließende Rolle auf, wobei eine zwischen der Welle und der Rolle eingespannte Torsionsfeder vorgesehen ist, um ein automatisches Aufwickeln einer an der Rolle befestigten Plane zu ermöglichen. An Endbereichen der Welle sind Kappen befestigt, die zum Einhängen in ortsfeste Halterungen des Kraftfahrzeuges bestimmt sind. Für eine Befestigung in dem Heckladeraum des Kraftfahrzeuges schlägt der oben genannte Stand der Technik vor, das Rollo an der Heckklappe oder an der Rückseite des Rücksitzes zu befestigen. Zu diesem Zweck kann eine Kappe gegen eine Federkraft axial verschoben werden, um ein Einrasten des Rollos in einer entsprechenden Aufnahme im Heckladeraum des Kraftfahrzeugs zu erzielen.

Eine Schutzvorrichtung gemäß dem Oberbegriff des Anspruchs 1 ist aus der US-A-5 813 449 bekannt.

Die der Erfindung zugrundeliegende Aufgabe besteht darin, eine Schutzvorrichtung zu schaffen, die in einfacher Weise auf unterschiedliche Kraftfahrzeuge anpassbar ist.

Diese Aufgabe wird durch eine Schutzvorrichtung mit den Merkmalen des Anspruchs 1 gelöst. Die Endkappen, die insbesondere starr mit der Rollowelle verbunden sein können, ermöglichen eine unmittelbare Übertragung von Kräften und Drehmomenten, die auf das Flächengebilde einwirken, auf die Adapterteile. Die Gestaltung der Endkappen mit zumindest zwei Stützabschnitten, die insbesondere als Führungsflächen, Führungsstege oder Führungsnuten ausgeführt sein können, ermöglicht die formschlüssige Übertragung von Kräften und Drehmomenten auf die Adapterteile. Durch eine Anordnung der Stützabschnitte in Umfangsrichtung der Endkappe, das heißt auf Flächenabschnitten, die sich in der Art einer Hülsenoberfläche bezogen auf eine Rotationsachse der Rollowelle erstrecken, kann eine vorteilhafte Kraft- und Momentenübertragung gewährleistet werden. Durch die Verwendung der Adapterteile, die formschlüssig auf die Endkappen aufgesetzt werden können und die die Kräfte und Momente auf das Flächengebilde über korrespondierend zu den Stützabschnitten der Endkappen ausgeführte Stützflächen aufnehmen können, wird es möglich, eine Schutzvorrichtung an unterschiedliche Kraftfahrzeuge anzupassen, ohne konstruktive Eingriffe an der Rollofunktionseinheit vornehmen zu müssen. Vielmehr wird eine fahrzeugindividuelle Anpassung der Schutzvorrichtung an die in dem jeweiligen Kraftfahrzeug vorliegenden Gegebenheiten lediglich durch Anbringung der auf das Kraftfahrzeug angepassten Adapterteile an die Endkappen bewerkstelligt, so dass die in der Herstellung aufwändige Rollofunktionseinheit ohne Änderungen für eine größere Anzahl von Kraftfahrzeugen einsetzbar ist. Sofern Anpassungen hinsichtlich der Länge und/oder Breite des flexiblen Flächengebildes notwendig sind, beispielsweise innerhalb einer Modellfamilie eines Kraftfahrzeug-Herstellers, geht davon seinerseits kein Einfluss auf die übrigen Funktionen der Schutzvorrichtung wie die Verriegelung der Rollofunktionseinheit im Innenraum des Kraftfahrzeugs aus.

Erfindungsgemäß ist die Rollofunktionseinheit für ein Aufund Abwickeln des flexiblen Flächengebildes mittels einer Federeinrichtung gestaltet und weist Anschlagmittel zur Aufrechterhaltung einer Vorspannung der Federeinrichtung in der Aufwickelposition auf. Die Rollofunktionseinheit stellt somit eine eigenständig funktionsfähige Baugruppe für die Schutzvorrichtung dar. Diese Baugruppe weist bis auf die Schnittstelle zur Verriegelung im Innenraum des Kraftfahrzeugs bereits alle Funktionalitäten auf, die für die Schutzvorrichtung wesentlich sind. Von Bedeutung ist hierbei insbesondere, dass die Rollofunktionseinheit derart gestaltet ist, dass auch bei vollständig aufgewickeltem flexiblen Flächengebilde und bei Abwesenheit der Adapterteile eine Vorspannung der Federeinrichtung gewährleistet werden kann. Die Federvorspannung in der aufgewickelten Position des flexiblen Flächengebildes ist vorgesehen, um ein ordnungsgemäßes Aufwickeln des flexiblen Flächengebildes sicherzustellen. Damit ist die Rollofunktionseinheit als eigenständige Baugruppe vormontierbar und betriebsbereit und kann durch einfaches Aufstecken der Adapterteile fahrzeugindividuell fertig gestellt werden.

Erfindungsgemäß ist zumindest ein Adapterteil beweglich an einer Endkappe angebracht. Durch eine bewegliche Anbringung des auswechselbaren Adapterteils kann in vorteilhafter Weise eine form- und/oder kraftschlüssige Verriegelung der Schutzvorrichtung in einem Innenraum des Kraftfahrzeuges erreicht werden. Dazu kann das Adapterteil aus einer Entriegelungsstellung in eine Verriegelungsstellung und umgekehrt verschoben werden. Eine Bewegung des Adapterteils gegenüber der Endkappe ist als Linearbewegung vorgesehen und insbesondere dann vorteilhaft, wenn das Adapterteil auch zur Übertragung eines Drehmomentes zwischen der Rolloachse und dem Kraftfahrzeug vorgesehen sein soll.

Erfindungsgemäß ist das Adapterteil relativ zur Endkappe in Richtung einer Mittelachse der Rollowelle durch ineinandergreifende Rastprofilierungen linearbeweglich geführt und axial formschlüssig begrenzt. Mit der linearbeweglichen Führung des Adapterteils gegenüber der Endkappe kann ein Toleranzausgleich zwischen der Schutzvorrichtung und dem Kraftfahrzeug, in dem die Schutzvorrichtung verriegelt werden soll, vorgenommen werden. Die Schutzvorrichtung kann in ihrer Länge, das heißt in Richtung der Mittelachse der Rollowelle insbesondere an eine Breite eines Laderaums des Kraftfahrzeugs angepasst werden. Zu diesem Zweck werden das oder die Adapterteile in Richtung der Mittelachse relativ zu den Endkappen verschoben. Die Rastprofilierungen stellen auch die korrekte Ausrichtung der Adapterteile gegenüber den Endkappen sicher. Durch die axial formschlüssige Begrenzung der linearen Bewegung zwischen Adapterteil und Endkappe wird sichergestellt, dass das Adapterteil nicht in unerwünschter Weise von der Endkappe abfällt, sondern zuverlässig beweglich an der Endkappe gehalten ist.

In Ausgestaltung der Erfindung bilden die Stützabschnitte einen im Wesentlichen geschlossenen, zumindest abschnittweise U-förmigen Querschnitt der Endkappe in einer Ebene normal zu einer Rotationsachse der Rollowelle. Mittels eines U-förmigen Querschnitts kann eine ansprechende und stabile Querschnittsgeometrie für die Endkappe verwirklicht werden. Die beiden U-Schenkel des U-förmigen Querschnitts sind zur Stabilisierung über einen Steg miteinander verbunden, so dass eine geschlossen Kontur verwirklich werden kann. Durch den Querschnitt der Endkappe wird eine formschlüssige Übertragung von Kräften und Drehmomenten auf die Adapterteile mittels der gekrümmten oder eben ausgeführten Flächen der U-förmigen Kontur ermöglicht. Kippmomente auf die Endkappen werden ebenfalls durch die Stützabschnitte auf die Adapterteile übertragen, die fest in einem Laderaum eines Kraftfahrzeugs verriegelt werden können und die ihrerseits die Kräfte und Drehmomente auf den Laderaum übertragen können.

In weiterer Ausgestaltung der Erfindung weist die zumindest eine Endkappe zumindest einen in Achsrichtung der Rollowelle erstreckten Führungssteg für das Adapterteil auf. Mit dem Führungssteg, der insbesondere erhaben über den im Wesentlichen U-förmigen Querschnitt der Endkappen herausragt, kann eine Führung des Adapterteils in Richtung der Rotationsachse der Rollowelle erzielt werden. Damit kann eine zusätzliche Sicherheit für die Übertragung von Kippmomenten zwischen Endkappe und Adapterteil gewährleistet werden. Zudem kann der Führungssteg auch als Abstandshalter zwischen dem Adapterteil und einem an der Endkappe anbringbaren Kassettengehäuse dienen. Damit werden unerwünschte Geräusche, die bei Relativbewegungen zwischen Adapterteil und Kassettengehäuse auftreten können, vermieden. Das Adapterteil hat bedingt durch den Führungssteg keinen unmittelbaren mechanischen Kontakt zum Kassettengehäuse.

In weiterer Ausgestaltung der Erfindung weist die zumindest eine Endkappe zumindest eine Führungsnut für eine schiebebewegliche Führung des Adapterteils auf. Mit Hilfe der Führungsnut, in die insbesondere eine dem Adapterteil zugeordnete Rastnase eingreift, können zusätzliche Stützabschnitte zur Verfügung gestellt werden, die eine Kraft- und Drehmomentübertragung ermöglichen. Zudem kann die Führungsnut für eine Wegbegrenzung des schiebebeweglichen Adapterteils genutzt werden, um ein unerwünschtes Entfernen des Adapterteils zu vermeiden.

In weiterer Ausgestaltung der Erfindung weist die Rollowelle endseitig angebrachte Lagerbuchsen für eine drehbewegliche Wirkverbindung mit einer koaxial angeordneten Rolloachse auf, wobei die Endkappen mit Endabschnitten der Rolloachse fest verbunden sind. Die Lagerbuchsen, die insbesondere fest mit der Rollowelle verbunden sind und gegenüber der Rolloachse als Gleitlager für die Rotation der Rollowelle wirken, ermöglichen in einfacher Weise die drehbewegliche Kopplung der Rollowelle an die Rolloachse. Die feste Verbindung der Endkappen mit Endabschnitten der Rolloachse ermöglicht es, ein von der Federeinrichtung auf die Rolloachse eingeleitetes Drehmoment, das als Aufwickelmoment für das flexible Flächengebilde nach außen in Erscheinung tritt, über die Endkappen bis in die Befestigung der Schutzvorrichtung im Innenraum des Kraftfahrzeugs abzuleiten.

In weiterer Ausgestaltung der Erfindung ist vorgesehen, dass zumindest eine Lagerbuchse als Aufnahme für einen Endbereich der Federeinrichtung ausgebildet ist. Damit kommt der Lagerbuchse eine Doppelfunktion zu, sie dient der Übertragung eines von der Federeinrichtung auf die Rollowelle zu übertragenden Drehmomentes und der Lagerung der Rollowelle an der Rolloachse. Damit lässt sich eine besonders einfache, kostengünstige und gewichtsoptimierte Schutzvorrichtung verwirklichen, bei der ein günstiger Kraftfluss zwischen Rolloachse, Federeinrichtung und Rollowelle sichergestellt ist.

In weiterer Ausgestaltung der Erfindung weist zumindest eine Lagerbuchse einen radial erstreckten, umlaufenden Ringbund auf, der einen Durchmesser aufweist, der größer als ein Innendurchmesser der Rollowelle ausgeführt ist. Mit Hilfe des Ringbundes wird sichergestellt, dass bei einer Montage der Lagerbuchse in die Rollowelle eine vordefinierte Position der Lagerbuchse relativ zur Rollowelle eingenommen wird. Weiterhin kann bei geeigneter Gestaltung des Ringbundes auf eine aufwändige Bearbeitung einer Stirnendfläche der Rollowelle, beispielsweise ein Entgraten, verzichtet werden, da die Stirnendfläche durch den umlaufenden Ringbund überdeckt wird.

In weiterer Ausgestaltung der Erfindung weist zumindest eine Lagerbuchse Rastmittel auf, die für eine formschlüssige Aufnahme in der Rollowelle ausgebildet sind. Damit kann eine vorteilhafte Montage der Lagerbuchse in die Rollowelle verwirklicht werden, wobei an der Rollowelle korrespondierend zu den Rastmitteln gestaltete Aufnahmebereiche vorgesehen sein können. Die Rastmittel können beispielsweise als Rastnasen ausgeführt sein, die elastisch, insbesondere über Festkörpergelenke, mit der Lagerbuchse verbunden sind und die korrespondierende Rastgeometrien in der Rollowelle hintergreifen.

In weiterer Ausgestaltung der Erfindung sind die Endkappen als Widerlager für ein an dem flexiblen Flächengebilde vorgesehenes formstabiles Auszugsprofil ausgebildet, so dass in einem aufgewickelten Zustand des flexiblen Flächengebildes eine Vorspannung der Federeinrichtung aufrechterhalten werden kann. Dabei kommt das formstabile Auszugsprofil, das insbesondere mit seitlich aus dem flexiblen Flächenelement abragenden Verriegelungsbereichen versehen ist, in der Aufwickelposition in Anlage mit zumindest einer Endkappe der Rollofunktionseinheit. Damit wird eine weitere Rotation der Rollowelle relativ zur Rolloachse verhindert, wodurch die für einen ordnungsgemäßen Aufrollvorgang notwendige Vorspannung der Federeinrichtung aufrechterhalten werden kann. Damit gewährleisten die Endkappen, dass die Rollofunktionseinheit nach ihrer Montage bereits ohne Adapterteile und ohne Anbringung in einem Innenraum eines Kraftfahrzeuges betriebsbereit ist und die während der Montage aufgebrachte Vorspannkraft der Federeinrichtung nicht verloren gehen kann.

In weiterer Ausgestaltung der Erfindung ist zwischen der Endkappe und dem Adapterteil eine Federeinrichtung vorgesehen. Mit einer in der Federeinrichtung gespeicherten Verriegelungsenergie kann das Adapterteil gegenüber der Endkappe in eine Verriegelungsstellung gebracht und dort gehalten werden. Für einen Entriegelungsvorgang muss das Adapterteil durch einen Benutzer entgegen der Federvorspannung der Federeinrichtung in eine Entriegelungsstellung gebracht werden. Damit kann in einfacher Weise eine zuverlässige Verriegelung der Schutzvorrichtung an dem Kraftfahrzeug verwirklicht werden.

In weiterer Ausgestaltung der Erfindung sind die Rastprofilierungen durch zumindest eine Ausnehmung und zumindest eine Rastnase gebildet, die dem Adapterteil und der Endkappe zugeordnet sind. Dabei kann die Ausnehmung insbesondere als Schlitz oder Nut ausgeführt sein und für die Aufnahme zumindest einer Rastnase vorgesehen sein. Die Rastnase kann an einer elastischen Zunge oder an einem formstabilen Abschnitt des Adapterteils oder der Endkappe angebracht sein und ist derart auf die Ausnehmung abgestimmt, dass eine reibungsarme Linearführung zwischen Adapterteil und Endkappe erreicht werden kann. Die zumindest eine Ausnehmung kann an der Endkappe und/oder dem Adapterteil vorgesehen sein, das gilt auch für die zumindest eine Rastnase. Bei einer bevorzugten Ausführungsform der Erfindung sind an dem Adapterteil zwei Rastnasen und an der Endkappe zwei korrespondierende Ausnehmungen zur Bildung der Rastprofilierungen vorgesehen.

In weiterer Ausgestaltung der Erfindung ist zumindest ein Adapterteil auswechselbar an einer Endkappe angebracht. Damit kann das Adapterteil, das für die Verriegelung der Schutzvorrichtung in dem Kraftfahrzeug eingesetzt wird, insbesondere bei einer Beschädigung ausgetauscht werden. Bei einer bevorzugten Ausführungsform der Schutzvorrichtung ist vorgesehen, dass das Adapterteil werkzeuglos ausgewechselt werden kann, dazu kann die Rastprofilierung, insbesondere die Rastnase, so ausgelegt werden, dass die Rastverbindung zwischen Endkappe und Adapterteil durch manuelle Betätigung aufgelöst werden kann.

In weiterer Ausgestaltung der Erfindung sind eine zwischen den Endkappen montierbare, die Rollowelle zumindest teilweise umgreifende Abdeckung, die form- und/oder kraftschlüssig an zumindest einer Endkappe anbringbar ist und/oder zumindest ein Adapterteil werkzeuglos mit der Endkappe verbindbar bzw. von dieser abnehmbar. Die Abdeckung, die im Wesentlichen formstabil ausgestaltet sein kann, dient zur Verkleidung der Rollowelle und des darauf aufgenommenen flexiblen Flächengebildes, um eine ansprechende optische Gestaltung der Schutzvorrichtung zu verwirklichen. Die Abdeckung, die auch als Kassettengehäuse bezeichnet werden kann, ist in allen Betriebszuständen der Schutzvorrichtung im Wesentlichen kraftfrei. Sie kann daher insbesondere auch als Kunststoffteil, beispielsweise als extrudiertes Kunststoffprofil oder auch als Metallteil, insbesondere als Blechformteil oder Strangpressteil hergestellt werden. Die Abdeckung und/oder zumindest ein Adapterteil sind für eine besonders vorteilhafte und einfache Anpassung an unterschiedliche Kraftfahrzeuge werkzeuglos mit der Endkappe verbindbar bzw. von dieser abnehmbar, so dass eine einfache Montage der Schutzvorrichtung gewährleistet ist.

In weiterer Ausgestaltung der Erfindung ist die Federeinrichtung als Wendelfeder ausgebildet und weist zumindest eine koaxial angeordnete Dämpfungshülse auf. Eine als Wendelfeder ausgebildete Federeinrichtung ermöglicht insbesondere bei koaxialer Anordnung der Wendelfeder gegenüber der Rolloachse eine besonders kompakte Gestaltung der Schutzvorrichtung. Um während des Auf- bzw. Abwickelvorganges und im aufgewickelten bzw. abgewickelten Zustand des flexiblen Flächengebildes ein vorteilhaftes Geräuschverhalten der Wendelfeder sicherzustellen, ist der Wendelfeder zumindest eine koaxial angeordnete Dämpfungshülse, insbesondere aus Kunststoff, zugeordnet. Die Dämpfungshülse ist für eine Reduktion von Schwingungen sowie Relativbewegungen der Wendelfeder vorgesehen und stellt somit eine Geräuschdämmung der Schutzvorrichtung sicher.

In weiterer Ausgestaltung der Erfindung ist die Rollofunktionseinheit mit dem zumindest einen Adapterteil crashsicher verriegelbar mit einem Kraftfahrzeuginnenraum ausgebildet. Damit ist sichergestellt, dass bei starken Verzögerungen des Kraftfahrzeuges, wie sie bei einem Umfall auftreten können, Gegenstande im Innenraum nicht zu einer Entriegelung der Schutzvorrichtung aus dem Innenraum führen, wodurch die Schutzfunktion in Frage gestellt wäre. Eine crashsichere Verriegelung kann insbesondere dann sichergestellt werden, wenn die Adapterteile gegenüber den Aufnahmen im Innenraum des Kraftfahrzeugs sowie gegenüber den Endkappen jeweils eine ausreichende Führungslänge aufweisen und in ihrer Gestaltung für die in einem Crashfall auftretenden Kräfte ausgelegt sind. Gleiches gilt auch für die Dimensionierung der Endkappen, des flexiblen Flächengebildes, der Rollowelle und der Rolloachse.

In weiterer Ausgestaltung der Erfindung ist ein Kassettengehäuse als Anschlagmittel für ein an dem flexiblen Flächengebilde vorgesehenes formstabiles Auszugsprofil ausgebildet ist, wobei das Auszugsprofil kürzer als ein minimaler Abstand zwischen den Endkappen ausgeführt sein kann. Das Kassettengehäuse kann dabei die Rollowelle zumindest nahezu vollständig umschließen oder nur abschnittsweise um die Rollowelle herum erstreckt sein. Durch die starre Kopplung der Endkappen mit der Rolloachse und die formschlüssige Kraftübertragung von den Endkappen auf die Adapterteile ist das Kassettengehäuse weitgehend frei von Kräften und kann im Hinblick auf Gestaltung und Herstellungskosten optimal auf den einzelnen Anwendungsfall konstruiert werden. Das Kassettengehäuse kann insbesondere schwimmend zwischen den Endkappen aufgenommen sein, das heißt, es ist mit einem geringfügigen Spiel an den Endkappen angebracht. Durch eine Verwendung des Kassettengehäuses als Anschlagmittel für das Auszugsprofil kann dieses kürzer als der Abstand der Endkappen ausgeführt werden. Dies ist insbesondere bei Schutzvorrichtungen von Interesse, die einen breiten Laderaum abdecken sollen, der jedoch endseitig in dem Bereich, in dem die Auszugsstange in der Funktionsposition eingehängt werden soll, durch Radkästen des Kraftfahrzeugs oder durch Antriebseinrichtungen für eine Heckklappe verengt ist. Damit ergibt sich insbesondere eine V-förmige oder T-förmige Gestaltung des flexiblen Flächengebildes und die Auszugsstange ist kürzer als der minimale Abstand der im breiten Bereich des Laderaums angebrachten Endkappen. Bedingt durch das Kassettengehäuse wird die Auszugsstange in der Ruheposition formschlüssig aufgenommen und hindert somit die Rollowelle an einer weiteren Umdrehung, die zu einem Verlust der Federvorspannung der Federeinrichtung führen würde.

Weitere Vorteile und Merkmale der Erfindung ergeben sich aus den Ansprüchen sowie der nachfolgenden Beschreibung eines bevorzugten Ausführungsbeispiels, das anhand der Zeichnungen dargestellt ist. Dabei zeigt
- Fig. 1: in einer perspektivischen Schnittansicht eine Schutzvorrichtung mit einer Rollofunktionseinheit und endseitig angebrachten Adapterteilen,
- Fig. 2: in einer perspektivischen Explosionsdarstellung die Schutzvorrichtung gemäß der Fig. 1,
- Fig. 3: eine perspektivische Ausschnittvergrößerung eines Endbereichs der Schutzvorrichtung in Explosionsdarstellung,
- Fig. 4: eine perspektivische Darstellung einer Endkappe
- Fig. 5: eine geschnittene perspektivische Darstellung der Endkappe gemäß der Fig. 4,
- Fig. 6: eine geschnittene perspektivische Darstellung eines Adapterteils,
- Fig. 7: eine perspektivische Ausschnittvergrößerung eines geschnitten dargestellten Endbereichs der Schutzvorrichtung in einer Zusammenbaudarstellung.

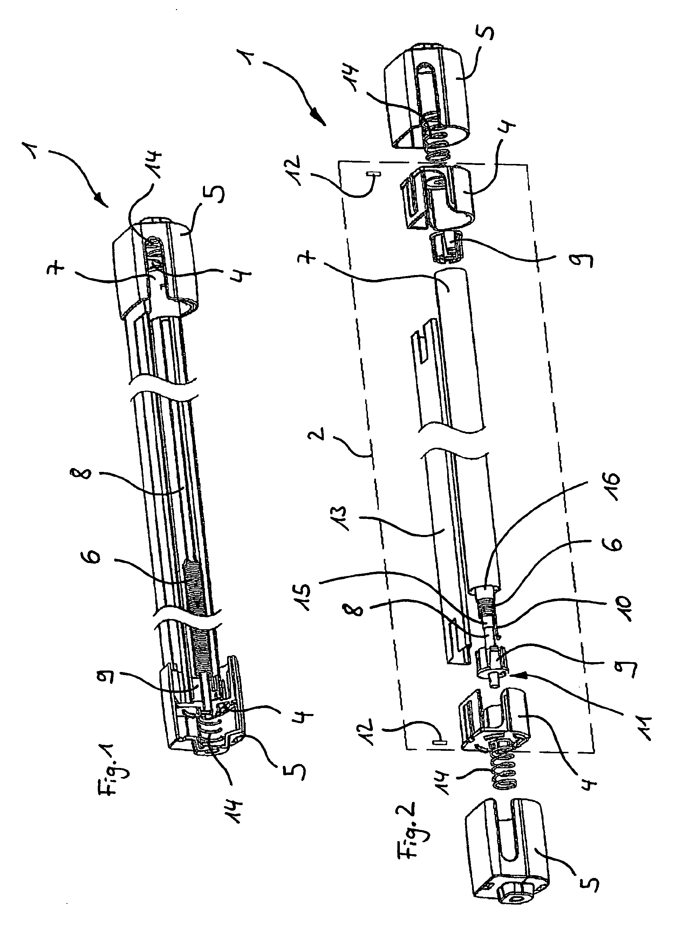

Eine Schutzvorrichtung 1 gemäß den Fig. 1 und 2 weist eine Rollofunktionseinheit 2 sowie endseitig an Endkappen 4 der Rollofunktionseinheit 2 angebrachte Adapterteile 5 auf. Die Rollofunktionseinheit 2 umfasst eine Rollowelle 7, die über Lagerbuchsen 9 drehbeweglich an einer Rolloachse 8 gelagert ist und die für die Aufnahme eines nicht näher dargestellten, als Abdeckplane ausgeführten flexiblen Flächengebildes vorgesehen ist. Für eine Speicherung einer Aufwickelenergie ist an der Rolloachse 8 eine als Wendelfeder ausgeführte Wickelfeder 6 vorgesehen, die mit einem L-förmigen Federendbereich 10 formschlüssig in einer Aufnahmenut 11 der Lagerbuchse 9 aufgenommen ist. Die Wickelfeder 6 ist an der Rolloachse 8 über einen nicht dargestellten Halteniet ortsfest angebracht, ebenso sind die Endkappen 4 mit Kerbstiften 12 ortsfest an Endbereichen der Rolloachse 8 befestigt.

Zwischen den Endkappen 4 ist formschlüssig ein im Wesentlichen L-förmig abgewinkeltes, als Kunststoffteil ausgeführtes Kassettengehäuse 13 angebracht, das auf die Endkappen 4 aufgesteckt ist und dort formschlüssig verriegelt ist. Durch die Gestaltung der Schutzvorrichtung 1 mit einer eigenständig funktionsfähigen Rollofunktionseinheit 2, bei der eine starre, für eine Kraftübertragung geeignete Verbindung zwischen den Endkappen 4 mittels der Rolloachse 8 vorgesehen ist, kommt dem Kassettengehäuse 13 im Wesentlichen eine dekorative Funktion sowie eine Schutzfunktion zur Abdeckung der Rollowelle 7 zu. Eine Kraftübertragung zwischen den Endkappen 4 über das Kassettengehäuse 13 findet, wenn überhaupt, nur in einem geringen Maß statt.

Die Adapterteile 5 sind jeweils über Druckfedern 14 elastisch gegenüber den Endkappen 4 angebracht und über Riegeleinrichtungen, die als Rastprofilierungen ausgeführt sind und die nachstehend näher beschrieben werden, schiebebeweglich an den Endkappen 4 zwischen einer Ruhestellung gemäß der Fig. 1 und einer nicht dargestellten Funktionsstellung gelagert.

Die Wickelfeder 6 ist mit zwei koaxial angeordneten Dämpfungshülsen 15 und 16 versehen, die für eine Geräuschdämmung bei einem Auf- bzw. Abwickelvorgang des flexiblen Flächengebildes sowie in einem Ruhe- bzw. Funktionszustand der Schutzvorrichtung 1 wirksam sind.

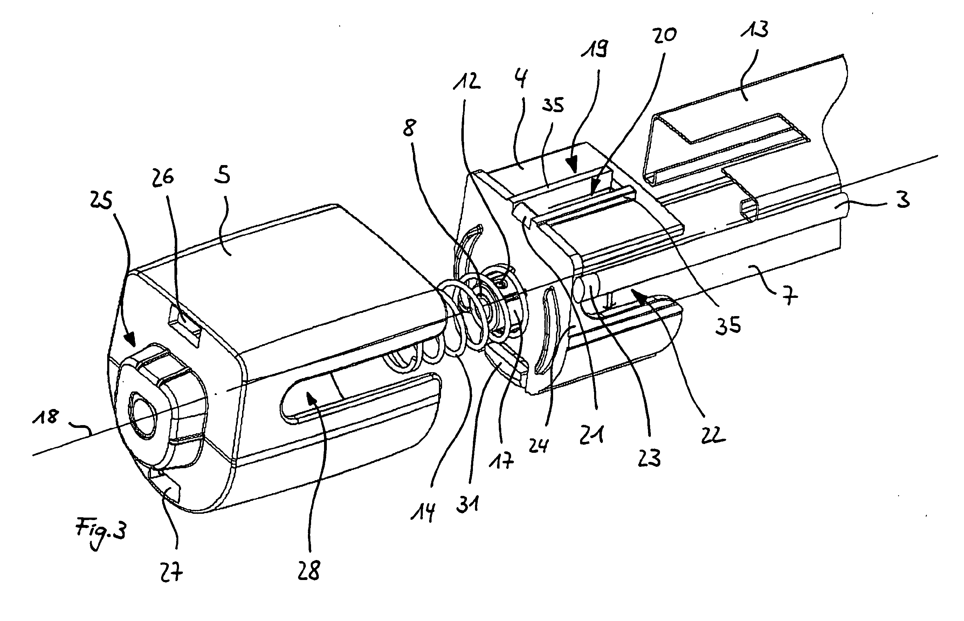

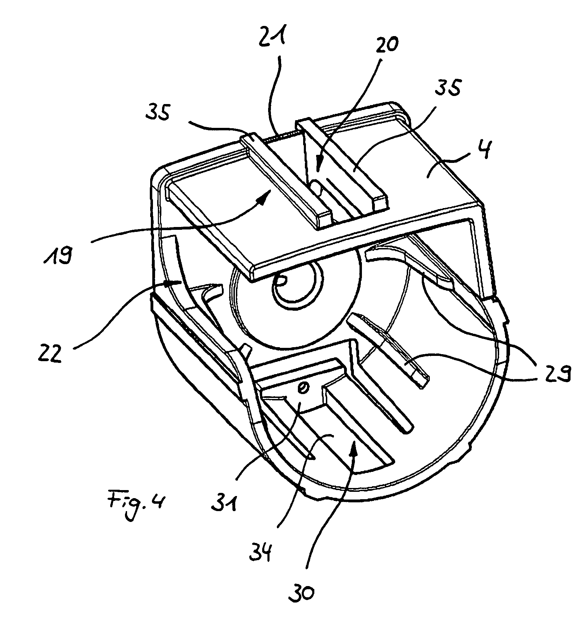

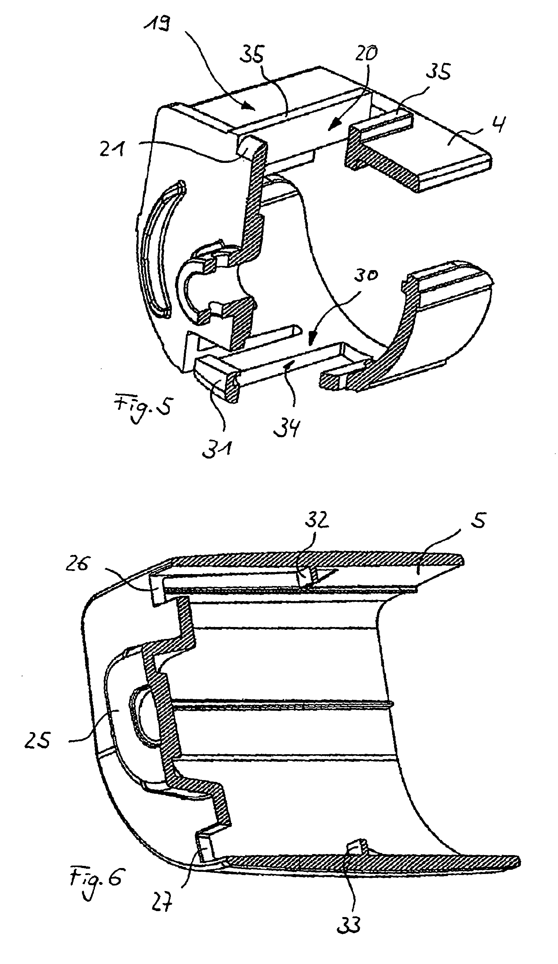

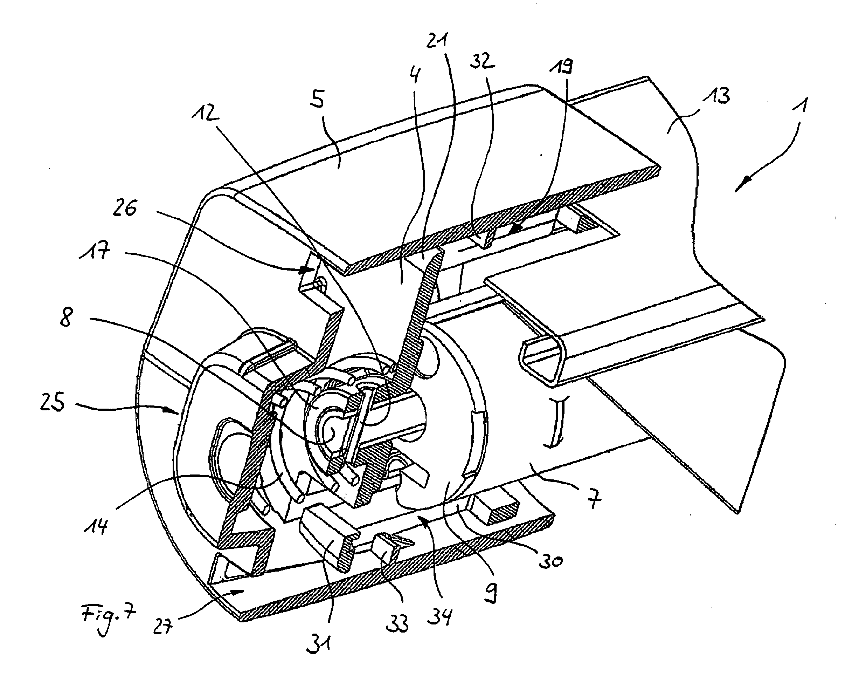

Gemäß der Darstellung der Fig. 3 und 7 weist die Endkappe 4 eine Reihe von Funktionsstrukturen auf, die nachfolgend näher erläutert werden sollen. An einer dem Adapterteil 5 zugewandten Stirnseite der Endkappe 4 ist eine Aufnahmebuchse 17 vorgesehen, die sich in Richtung des Adapterteils 5 erstreckt und die für eine Aufnahme der Rolloachse 8 sowie der Druckfeder 14 ausgebildet ist. Die Rolloachse 8 ist in einer Bohrung der Aufnahmebuchse 17 eingesteckt und ist mit dem orthogonal zu einer Mittellängsachse 18 ausgerichteten Kerbstift 12 formschlüssig befestigt. Die Druckfeder 14 ist konzentrisch zu der Aufnahmebuchse 17 an deren Außenumfang angeordnet und liegt mit einer Endwindung auf der Stirnseite der Endkappe 4 auf. An einer Oberseite der Endkappe 4 ist eine Schiebeführung 19 für eine formschlüssige Aufnahme des Kassettengehäuses 13 vorgesehen, das als extrudiertes Kunststoffprofil ausgeführt ist und das die Endkappe 4 abschnittsweise umgreift. Die Schiebeführung 19 weist eine von Führungsstegen 35 begrenzte, als Führungsschlitz 20 ausgeführte Ausnehmung auf, die in den Fig. 4 und 5 näher dargestellt ist und die in Richtung des Adapterteils 5 von einem Keilabschnitt 21 begrenzt wird. An einer Außenseite der Führungsstegen 35, die erhaben von der Oberseite der Endkappe 4 abragen, ist das Kassettengehäuse 13, das mit einem korrespondierend ausgeführten Schlitz versehen ist, formschlüssig aufgenommen. Die Führungsstege 35 dienen auch als Abstandshalter für das Adapterteil 5, das mit einer Innenfläche auf der Oberseite des Führungssteges 35 gleiten kann und damit bei geeigneter Materialpaarung nahezu geräuschlos verschiebbar ist, so das auch im Einsatz der Schutzvorrichtung keine durch Vibrationen hervorgerufenen Quietschgeräusche oder Ähnliches auftreten. Da keine oder zumindest nahezu keine Kraftübertragung zwischen Kassettengehäuse 13 und den Endkappen 4 vorgesehen ist, kann der Schlitz im Kassettengehäuse 13 mit einer kostengünstig zu fertigenden, großen Toleranz hergestellt werden. Außerdem kann eine spielbehaftete Passung zwischen den Endkappen 4 und dem Kassettengehäuse 13 verwirklicht werden, die es erleichtert, Geräuschdämmungsmaßnahmen, beispielsweise durch Textilbänder, zwischen Endkappe 4 und Kassettengehäuse 13 vorzusehen.

Der Keilabschnitt 21 ermöglicht eine einfache Montage des Adapterteils 5, an dem an einer Innenwandung eine korrespondierend zu dem Führungsschlitz 20 ausgeführte, in der Fig. 6 näher dargestellte Rastnase 32 vorgesehen ist, die Teil der Rastprofilierung ist. Die Rastnase 32 gleitet beim Aufstecken des Adapterteils 5 auf die Endkappe 4 über den Keilabschnitt 21 und wird in dem Führungsschlitz 20 schiebebeweglich aufgenommen. Ebenso gleitet eine Rastnase 33 in eine nachstehend näher beschriebene, als Schlitz 34 ausgeführte Ausnehmung.

An einem Seitenbereich der Endkappe 4 ist ein Auszugsschlitz 22 vorgesehen, der ein Auf- und Abwickeln des auf der Rollowelle 7 aufgenommenen flexiblen Flächengebildes 3 ermöglicht. Das flexible Flächengebilde ist in einem ersten endseitigen Bereich an der Rollowelle 7 befestigt und weist an einem zweiten endseitigen Bereich eine Auszugstange 23 auf, die ein komfortables Ergreifen der Abdeckplane durch einen Bediener ermöglicht. Die Auszugstange 23 ist mit zylindrischen Endbereichen für eine Aufnahme in fahrzeugfesten Verriegelungsnuten versehen.

Bei der in Fig. 3 dargestellten Ruheposition der Schutzvorrichtung kommt der zylindrische Endbereich der Auszugstange 23 mit der Seitenfläche 24 der Endkappe 4 in eine formschlüssige Wirkverbindung, wodurch ein Aufwickelvorgang des flexiblen Flächengebildes auf die Rollowelle 7 begrenzt wird. Durch diese Wirkverbindung ist auch ohne angebrachte Adapterteile 5 sichergestellt, dass eine in der Federeinrichtung 6 gespeicherte Vorspannung im aufgewickelten Zustand des flexiblen Flächengebildes erhalten bleibt.

Die Endkappe 4 sowie das Adapterteil 5 weisen jeweils einen umlaufenden, abschnittsweise im Wesentlichen U-förmigen Querschnitt auf, wobei das Adapterteil 5 für eine schiebebewegliche Aufnahme der Endkappe 4 ausgebildet ist. Durch den abschnittsweise U-förmig gestalteten Querschnitt wird eine formschlüssige Drehmomentübertragung zwischen der Endkappe 4 und dem Adapterteil 5 mittels der jeweiligen Stützabschnitte ermöglicht, die durch die Außenflächen der abschnittsweise U-förmig gestalteten Endkappe 4 gebildet werden und die durch die formschlüssige Aufnahme der Endkappe 4 im Adapterteil 5 mit Innenflächen des Adapterteils 5 in Wirkverbindung treten. Das Adapterteil 5 weist seinerseits in einem der Endkappe 4 abgewandten Stirnbereich eine erhaben ausgeführte Riegelstruktur 25 auf, die für eine formschlüssige Verriegelung in einem Innenraum eines Kraftfahrzeuges vorgesehen ist. Die Riegelstruktur 25 ist mit einem im wesentlichen quadratischen Querschnitt versehen, der verrundete Ecken aufweist und ermöglicht damit eine Kraft- und Drehmomentübertragung auf das Kraftfahrzeug. An dem Adapterteil 5 sind stirnseitig Eingriffsöffnungen 26 und 27 vorgesehen, die einen Zugriff auf eine in den Fig. 5 und 7 näher dargestellte Riegeltaste 31 ermöglichen und damit eine Demontage des Adapterteils 5 von der Endkappe 4 ermöglichen.

Das Adapterteil 5 ist mit einem Durchgangsschlitz 28 versehen, der korrespondierend mit dem Auszugsschlitz 22 der Endkappe 4 ausgeführt ist und der unabhängig von der Position des Adapterteils 5 gegenüber der Endkappe 4 ein ungehindertes Ab- bzw. Aufwickeln des flexiblen Flächengebildes 3 von der Rollowelle 7 ermöglicht.

Wie in der Fig. 4 näher dargestellt, ist die Endkappe 4 an einer Innenfläche mit Verstärkungsrippen 29 versehen, die einen Stirnbereich der Endkappe 4 abstützen und damit eine vorteilhafte Versteifung bewirken. An einer Unterseite der Endkappe 4 ist eine in den Fig. 4 und 5 näher dargestellte, über ein Festkörpergelenk 30 an die Endkappe 4 angebundene Riegeltaste 31 ausgebildet, die mit der als Schlitz 34 ausgeführten Ausnehmung für eine Aufnahme der Rastnase 33 des Adapterteils 5 vorgesehen ist und eine werkzeuglose Ankopplung des Adapterteils 5 an der Endkappe 4 mittels einer Rastverbindung ermöglicht.

Eine Abkopplung des Adapterteils 5 von der Endkappe 4 kann durch Auslenkung der Riegeltaste 31 beispielsweise mit einem Schraubendreher vorgenommen werden. Der Schraubendreher wird mit der Klinge an die Riegeltaste 31 herangeführt, um diese aus der in den Fig. 4, 5 und 6 dargestellten Ruheposition auszulenken. Somit kann die formschlüssige Verbindung zwischen Endkappe 4 und Adapterteil 5 aufgelöst werden, so dass das Adapterteil 5 von der Endkappe 4 abgezogen werden kann. Der an der Endkappe 4 vorgesehene Führungsschlitz 20 und der Schlitz 34 bilden die Ausnehmungen, in die die an dem Adapterteil 5 vorgesehenen Rastnasen 32, 33 formschlüssig eingreifen können. Die durch die Schlitze 20, 34 und die Rastnasen 32, 33 gebildeten Rastprofilierungen gewährleisten eine linearbewegliche Führung und eine axial formschlüssige Verriegelung des Adapterteils 5 mit der Endkappe 4**.**

Sowohl die Endkappe 4 als auch das Adapterteil 5 sind bei der dargestellten Ausführungsform als Kunststoffspritzgussteile ausgeführt und können bei geeigneter Materialauswahl eine crashsichere Verankerung der Rollofunktionseinheit 2 im Innenraum eines Kraftfahrzeuges sicherstellen. Das Kassettengehäuse 13, das im wesentlichen eine dekorative Funktion hat, kann neben einer Ausführung als Kunststoffextrusionsteil oder Kunststoffspritzgussteil auch als Aluminiumstrangpressteil oder als abgekantetes, lackiertes oder anderweitig beschichtetes Blechteil ausgeführt sein, so dass eine Vielfalt von Gestaltungsmöglichkeiten vorliegt, die eine besonders vorteilhafte Anpassung an unterschiedliche Kraftfahrzeuge ermöglicht.

Für eine Montage der Schutzvorrichtung ist vorgesehen, die innere Dämpfungshülse 15 auf die Rolloachse 8 aufzuschieben, anschließend die Wickelfeder 6 auf die Dämpfungshülse 15 aufzuschieben und mit der Rolloachse 8 über eine Nietverbindung zu befestigen. Anschließend wird die äußere Dämpfungshülse 16 auf die Wickelfeder 6 aufgeschoben und der Federendbereich 10 in die Aufnahmenut 11 der Lagerbuchse 9 eingeschoben. Anschließend wird die Rollowelle 7 auf die Lagerbuchse 9 aufgeschoben und durch die Rastnase der Lagerbuchse 9 formschlüssig verriegelt. An dem entgegengesetzten Endbereich der Rollowelle 7 wird ebenfalls eine Lagerbuchse 9 aufgeschoben und ebenfalls formschlüssig verriegelt, wodurch insgesamt eine Gleitlagerung zwischen Rollowelle 7 und Rolloachse 8 hergestellt ist. In einem nächsten Arbeitsschritt wird jeweils endseitig auf die Rolloachse 8 eine Endkappe 4 aufgeschoben und mittels eines Kerbstiftes 12 gesichert. Dadurch wird eine starre Verbindung zwischen den Endkappen 4 mittels der Rolloachse 8 hergestellt, über die die in das flexible Flächengebilde eingeleiteten Kräfte in die Adapterteile 5 und damit in das Kraftfahrzeug abgeleitet werden können. Je nach Einsatzgebiet kann zwischen die Endkappen 4 ein Kassettengehäuse 13 aufgenommen werden, das die Rollowelle 7 teilweise oder zumindest nahezu vollständig umschließt und dem zumindest nahezu keine Rolle bei der Übertragung von Kräften und Drehmomenten zwischen dem flexiblen Flächengebilde, den Endkappen, den Adapterteilen und dem Kraftfahrzeug zukommt. Damit ist die Rollofunktionseinheit 2 als eigenständige Baugruppe vormontiert.

In einem nachfolgenden Arbeitsschritt werden Druckfedern 14 auf die Aufnahmebuchsen 17 der Endkappen 4 aufgesteckt und Adapterteile 5 auf die Endkappen 4 aufgeschoben, wobei jeweils in den Adapterteilen 5 vorgesehene Rastnasen 32, 33 über die Keilabschnitte 21 der Endkappen 4 hinweggleiten und somit eine verschiebbare, formschlüssige Wirkverbindung zwischen den Endkappen 4 und den Adapterteilen 5 hervorrufen.

Für eine Montage der Schutzvorrichtung 1 in einem Kraftfahrzeug werden entgegengesetzt gerichtete Kräfte in Richtung der Mittellängsachse 18 auf die Adapterteile 5 ausgeübt, so dass die Druckfedern 14 komprimiert werden und sich die Adapterteile 5 einander annähern. In diesem Zustand kann die Schutzvorrichtung 1 in eine entsprechend geformte Aufnahme eines Kraftfahrzeuginnenraums eingesetzt werden. Nach Reduzieren der Bedienkraft findet eine selbsttätige Verriegelung der Adapterteile 5 im Kraftfahrzeuginnenraum statt.

Die Rollofunktionseinheit 2 stellt bereits für sich eine funktionsfähige Schutzvorrichtung dar, da das flexible Flächengebilde 3 von der Rollowelle 7 auf- und abgewickelt werden kann und durch die Wirkverbindung zwischen den Endkappen 4 und der Auszugsstange 23 sichergestellt ist, dass eine Federvorspannung der Wickelfeder 6 in der aufgewickelten Ruhestellung des flexiblen Flächengebildes 3 nicht verloren geht. Die Rollofunktionseinheit 2 kann durch Aufstecken der Adapterteile 5 fahrzeugindividuell angepasst werden. Durch die starre Verbindung zwischen den Endkappen 4 über die Rolloachse 8 werden Kräfte, die auf das flexible Flächengebilde einwirken, von der Rollowelle 7 unmittelbar auf die Endkappen 4 übertragen und müssen nicht, wie bei bekannten Schutzvorrichtungen, zwischen den Endkappen über ein formstabiles und damit teures Kassettengehäuse geleitet werden.

## Patentansprüche

1. Schutzvorrichtung (1) für ein Kraftfahrzeug mit einer Rollofünktionseinheit (2), die ein von einer Rollowelle (7) auf- und abwickelbares flexibles Flächengebilde (3) umfasst und endseitig an Endkappen (4) der Rollofunktionseinheit (2) anbringbare Adapterteile (5) für eine fahrzeugindividuelle form- und/oder kraftschlüssige Anbringung in einem Kraftfahrzeuginnenraum aufweist, wobei die Rollowelle (7) drehbeweglich an den Endkappen (4) gelagert ist, und wobei zumindest eine Endkappe (4) zumindest zwei in einer Umfangsrichtung voneinander beabstandete Stützabschnitte aufweist, die für eine formschlüssige Kraftübertragung auf ein Adapterteil gestaltet sind, **dadurch gekennzeichnet, dass** die Rollofunktionseinheit (2) für ein Auf- und Abwickeln des flexiblen Flächengebildes (3) mittels einer Federeinrichtung (6) gestaltet ist und Anschlagmittel zur Aufrechterhaltung einer Vorspannung der Federeinrichtung (6) in der Aufwickelposition aufweist, dass an wenigstens einem Adapterteil (5) und einer zugeordneten Endkappe (4) ineinander greifende Rastprofilierungen (20, 32, 33, 34) vorgesehen sind, und dass das Adapterteil (5) relativ zur Endkappe (4) in Richtung einer Mittelachse der Rollowelle (7) durch die ineinander greifenden Rastprofilierungen linear beweglich geführt und in seiner Linearbeweglichkeit axial formschlüssig begrenzt ist.

2. Schutzvorrichtung nach Anspruch 1, **dadurch gekennzeichnet, dass** die Stützabschnitte einen im Wesentlichen geschlossenen, zumindest abschnittweise U-förmigen Querschnitt der Endkappe (4) in einer Ebene normal zu einer Rotationsachse der Rollowelle (7) bilden.

3. Schutzvorrichtung nach Anspruch 2, **dadurch gekennzeichnet, dass** die zumindest eine Endkappe (4) zumindest einen in Achsrichtung der Rollowelle (7) erstreckten Führungssteg (35) für das Adapterteil (5) aufweist.

4. Schutzvorrichtung nach Anspruch 1, **dadurch gekennzeichnet, dass** die zumindest eine Endkappe zumindest eine Führungsnut für eine schiebebewegliche Führung des Adapterteils aufweist.

5. Schutzvorrichtung nach Anspruch 1, **dadurch gekennzeichnet, dass** die Rollowelle (7) endseitig angebrachte Lagerbuchsen (9) für eine drehbewegliche Wirkverbindung mit einer koaxial angeordneten Rolloachse (8) aufweist und die Endkappen (4) mit Endabschnitten der Rolloachse (8) fest verbunden sind.

6. Schutzvorrichtung nach Anspruch 5, **dadurch gekennzeichnet, dass** zumindest eine Lagerbuchse (9) als Aufnahme für einen Endbereich der Federeinrichtung (6) ausgebildet ist.

7. Schutzvorrichtung nach Anspruch 6, **dadurch gekennzeichnet, dass** zumindest eine Lagerbuchse (9) einen radial erstreckten, umlaufenden Ringbund aufweist, der einen Durchmesser aufweist, der größer als ein Innendurchmesser der Rollowelle (7) ausgeführt ist.

8. Schutzvorrichtung nach Anspruch 6 oder 7, **dadurch gekennzeichnet, dass** zumindest eine Lagerbuchse (9) Rastmittel aufweist, die für eine formschlüssige Aufnahme in der Rollowelle (7) ausgebildet sind.

9. Schutzvorrichtung nach Anspruch 5, **dadurch gekennzeichnet, dass** die Endkappen (4) als Anschlagmittel für ein an dem flexiblen Flächengebilde (3) vorgesehenes formstabiles Auszugsprofil (23) ausgebildet sind, so dass in einem aufgewickelten Zustand des flexiblen Flächengebildes (3) eine Vorspannung der Federeinrichtung (6) aufrecht erhalten werden kann.

10. Schutzvorrichtung nach Anspruch 1, **dadurch gekennzeichnet, dass** die Rastprofilierungen durch zumindest eine Ausnehmung und zumindest eine Rastnase gebildet sind, die dem Adapterteil und der Endkappe zugeordnet sind.

11. Schutzvorrichtung nach Anspruch 1, **dadurch gekennzeichnet, dass** zumindest ein Adapterteil (5) auswechselbar an einer Endkappe (4) angebracht ist.

12. Schutzvorrichtung nach Anspruch 1, **dadurch gekennzeichnet, dass** zwischen der Endkappe (4) und dem Adapterteil (5) eine Federeinrichtung (14) vorgesehen ist.

13. Schutzvorrichtung nach Anspruch 1, **dadurch gekennzeichnet, dass** eine zwischen den Endkappen (4) montierbare, die Rollowelle (7) zumindest teilweise umgreifende Abdeckung (13), die form- und/oder kraftschlüssig an zumindest einer Endkappe (4) anbringbar ist und/oder zumindest ein Adapterteil (5) werkzeuglos mit der Endkappe (4) verbindbar bzw. von dieser abnehmbar sind.

14. Schutzvorrichtung nach Anspruch 1, **dadurch gekennzeichnet, dass** die Federeinrichtung (6) als Wendelfeder ausgebildet ist, der zumindest eine koaxial angeordnete Dämpfungshülse (15) zugeordnet ist.

15. Schutzvorrichtung nach Anspruch 1, **dadurch gekennzeichnet, dass** ein Kassettengehäuse (13) als Anschlagmittel für ein an dem flexiblen Flächengebilde (3) vorgesehenes formstabiles Auszugsprofil (23) ausgebildet ist, so dass das Auszugsprofil (23) kürzer als ein minimaler Abstand zwischen den Endkappen (4) ausgeführt sein kann.

## Claims

1. Protection device (1) for a motor vehicle, having a roller blind functional unit (2) which comprises a flexible planar structure (3) that can be wound up and unwound by a roller blind shaft (7) and which has adaptor parts (5) that can be fitted at the ends to end caps (4) of the roller blind functional unit (4) for positive and/or non-positive fitting in an interior space of a motor vehicle in a manner individual to the vehicle, the roller blind shaft (7) being supported at the end caps (4) so as to be rotatable, and at least one end cap (4) having at least two supporting sections which are spaced from each other in a circumferential direction and are configured for positive transmission of force to an adaptor part, **characterized in that** the roller blind functional unit (2) is configured for winding-up and unwinding the flexible planar structure (3) by means of a spring mechanism (6) and has stop means for maintaining a pre-tension of the spring mechanism (6) in the winding-up position, **in that** locking profiles (20, 32, 33, 34) engaging in one another are provided on at least one adaptor part (5) and an associated end cap (4), and **in that** the adaptor part (5) is guided to be linearly movable relative to the end cap (4) in the direction of a central axis of the roller blind shaft (7) by means of the locking profiles engaging in one another and is axially restricted in a positive manner in its linear mobility.

2. Protection device according to claim 1, **characterized in that** the supporting sections form a substantially closed and, at least in sections, U-shaped cross-section of the end cap (4) in a plane normal to an axis of rotation of the roller blind shaft (7).

3. Protection device according to claim 2, **characterized in that** the at least one end cap (4) has at least one guide web (35), extended in the direction of the axis of the roller blind shaft (7), for the adaptor part (5).

4. Protection device according to claim 1, **characterized in that** the at least one end cap has at least one guide groove for slidable guiding of the adaptor part.

5. Protection device according to claim 1, **characterized in that** the roller blind shaft (7) has mounted at the ends bearing bushes (9) for a rotatable working connection with a coaxially arranged roller blind spindle (8) and the end caps (4) are rigidly connected to end portions of the roller blind spindle (8).

6. Protection device according to claim 5, **characterized in that** at least one bearing bush (9) is in the form of a socket for an end region of the spring mechanism (6).

7. Protection device according to claim 6, **characterized in that** at least one bearing bush (9) has a radially extended, circumferential annular collar having a diameter greater than an inside diameter of the roller blind shaft (7).

8. Protection device according to claim 6 or 7, **characterized in that** at least one bearing bush (9) has locking means which are configured to be received in a positive fit in the roller blind shaft (7).

9. Protection device according to claim 5, **characterized in that** the end caps (4) are in the form of stop means for a dimensionally stable pull-out profile (23) provided on the flexible planar structure (3), so that in a wound-up state of the flexible planar structure (3) a pre-tension of the spring mechanism (6) can be maintained.

10. Protection device according to claim 1, **characterized in that** the locking profiles are formed by means of at least one recess and at least one detent, which are associated with the adaptor part and the end cap.

11. Protection device according to claim 1, **characterized in that** at least one adaptor part (5) is exchangeably mounted on an end cap (4).

12. Protection device according to claim 1, **characterized in that** a spring mechanism (14) is provided between the end cap (4) and the adaptor part (5).

13. Protection device according to claim 1, **characterized in that** a cover (13) which can be mounted between the end caps (4) and engages at least partially around the roller blind shaft (7), and which can be fitted positively or non-positively to at least one end cap (4) and/or at least one adaptor part (5) can be connected to the end cap (4) or removed therefrom without tools.

14. Protection device according to claim 1, **characterized in that** the spring mechanism (6) is in the form of a helical coiled spring with which at least one coaxially arranged damping sleeve (15) is associated.

15. Protection device according to claim 1, **characterized in that** a magazine housing (13) is in the form of a stop means for a dimensionally stable pull-out profile (23) provided on the flexible planar structure (3), so that the pull-out profile (23) can be made shorter than a minimum distance between the end caps (4).

## Revendications

1. Dispositif de protection (1) pour un véhicule automobile comportant une unité fonctionnelle de store (2), qui comprend une structure plane flexible (3) enroulable et déroulable par un arbre de store (7) et qui présente des pièces adaptatrices (5) pouvant être posées côté extrémité au niveau de capuchons terminaux (4) de l'unité fonctionnelle de store (2) pour une pose par complémentarité de forme et/ou par force individuelle au véhicule dans un habitacle de véhicule automobile, dans lequel l'arbre de store (7) est logé en rotation au niveau des capuchons terminaux (4) et dans lequel au moins un capuchon terminal (4) présente pour le moins deux sections d'appui espacées l'une de l'autre dans une direction périphérique qui sont configurées pour une transmission de force par complémentarité de forme à une pièce adaptatrice, **caractérisé en ce que** l'unité fonctionnelle de store (2) est configurée pour un enroulement et déroulement de la structure plane flexible (3) au moyen d'un dispositif à ressort (6) et présente des accessoires d'élingage destinés au maintien d'une précontrainte du dispositif à ressort (6) dans la position d'enroulement, **en ce que** des profils d'enclenchement s'emboîtant (20, 32, 33, 34) sont prévus au niveau d'au moins une pièce adaptatrice (5) et d'un capuchon terminal associé (4) et **en ce que** la pièce adaptatrice (5) est guidée linéairement par rapport au capuchon terminal (4) en direction d'un axe central de l'arbre de store (7) grâce à des profils d'enclenchement s'emboîtant et est limitée axialement par complémentarité de forme dans sa mobilité linéaire.

2. Dispositif de protection selon la revendication 1, **caractérisé en ce que** les sections d'appui forment une section transversale du capuchon terminal (4) pour l'essentiel fermée et en forme de U pour le moins par sections dans un plan normal par rapport à un axe de rotation de l'arbre de store (7).

3. Dispositif de protection selon la revendication 2, **caractérisé en ce que** ledit au moins un capuchon terminal (4) présente au moins une barrette de guidage (35) s'étendant dans la direction axiale de l'arbre de store (7) pour la pièce adaptatrice (5).

4. Dispositif de protection selon la revendication 1, **caractérisé en ce que** ledit au moins un capuchon terminal présente au moins une rainure de guidage pour un guidage coulissant de la pièce adaptatrice.

5. Dispositif de protection selon la revendication 1, **caractérisé en ce que** l'arbre de store (7) présente des douilles de palier (9) posées côté extrémité pour une liaison fonctionnelle à rotation avec un axe de store (8) disposé coaxialement et **en ce que** les capuchons terminaux (4) sont rigidement assemblés avec des sections terminales de l'axe de store (8).

6. Dispositif de protection selon la revendication 5, **caractérisé en ce que** pour le moins une douille de palier (9) est conçue sous forme de logement pour une zone terminale du dispositif à ressort (6).

7. Dispositif de protection selon la revendication 6, **caractérisé en ce que** pour le moins une douille de palier (9) présente un épaulement annulaire circulaire à extension radiale qui présente un diamètre qui est réalisé plus grand qu'un diamètre intérieur de l'arbre de store (7).

8. Dispositif de protection selon la revendication 6 ou 7, **caractérisé en ce que** pour le moins une douille de palier (9) présente des moyens d'enclenchement qui sont conçus pour un logement par complémentarité de forme dans l'arbre de store (7).

9. Dispositif de protection selon la revendication 5, **caractérisé en ce que** les capuchons terminaux (4) sont conçus sous forme d'accessoires d'élingage pour un profilé de déploiement de forme stable (23) prévu au niveau de la structure plane flexible (3) de manière à ce qu'une précontrainte du dispositif à ressort (6) puisse être maintenue dans un état enroulé de la structure plane flexible (3).

10. Dispositif de protection selon la revendication 1, **caractérisé en ce que** les profils d'enclenchement sont formés par l'au moins un évidement et par l'au moins un ergot d'arrêt, lesquels sont affectés à la pièce adaptatrice et au capuchon terminal.

11. Dispositif de protection selon la revendication 1, **caractérisé en ce que** pour le moins une pièce adaptatrice (5) est posée de façon interchangeable au niveau d'un capuchon terminal (4).

12. Dispositif de protection selon la revendication 1, **caractérisé en ce qu'**un dispositif à ressort (14) est prévu entre le capuchon terminal (4) et la pièce adaptatrice (5).

13. Dispositif de protection selon la revendication 1, **caractérisé en ce qu'**un cache (13) pouvant être monté entre les capuchons terminaux (4) et enveloppant pour le moins en partie l'arbre de store (7), qui peut être posé par complémentarité de forme et/ou par force au niveau d'au moins un capuchon terminal (4), et/ou pour le moins une pièce adaptatrice (5) peuvent être assemblés sans outils avec le capuchon terminal (4) ou peuvent être démontés de ce dernier.

14. Dispositif de protection selon la revendication 1, **caractérisé en ce que** le dispositif à ressort (6) est conçu sous forme de ressort spiral auquel est associée au moins une douille d'amortissement (15) disposée coaxialement.

15. Dispositif de protection selon la revendication 1, **caractérisé en ce qu'**un boîtier à cartouche (13) est conçu sous forme d'accessoires d'élingage pour un profilé de déploiement de forme stable (23) prévu au niveau de la structure plane flexible (3) de manière à ce que le profilé de déploiement (23) puisse être réalisé plus court qu'un écartement minimal entre les capuchons terminaux (4).
